# EUROPÄISCHE PATENTANMELDUNG

(11) **EP 1 632 334 A2**
(43) Veröffentlichungstag der Anmeldung: **08.03.2006**
(21) Anmeldenummer: 05010181.5
(22) Anmeldetag: 11.05.2005
(51) Int. Cl.: B29C 65/18, B65B 9/04, B65B 51/16, B29C 65/14

(54) **Vorrichtung zum Siegeln**

(30) Priorität: 06.09.2004 DE 102004043450
(71) Anmelder: UHLMANN PAC-SYSTEME GmbH & Co. KG, 88471 Laupheim (DE)
(72) Erfinder: Gertitschke, Detlev, 88471 Laupheim (DE); Zoller, Bernd, 88471 Laupheim (DE); Knüppel, Jörg, 88477 Schwendi (DE)
(74) Vertreter: Hentrich, Swen

(57) **Zusammenfassung**

Die Erfindung betrifft eine Vorrichtung zum Siegeln einer ersten Packstoffbahn (2), auf eine zweite Packstoffbahn (3), mit einer Vorschubwalze (7) und einer beheizbaren Siegelwalze (8), zwischen denen die erste Packstoffbahn (2) und die zweite Packstoffbahn (3) zum Siegeln hindurchführbar sind, und mit einer Vorheizung (10) zum Erwärmen der ersten Packstoffbahn (2) stromauf vor der Siegelwalze (8). Die Vorheizung (10) weist eine elektromagnetische Strahlung aussendende Strahlungsquelle auf, die in einer Strahlungskammer (12) eines Heizungsgehäuses (11) angeordnet ist, an der die erste Packstoffbahn (2) vorbeiführbar ist, wobei ein Sensor (15) zur Überwachung der Atmosphäre der Strahlungskammer (12) zugeordnet ist und in Abhängigkeit des Sensorsignals die Strahlungskammer (12) verschließbar ist.

## Beschreibung

Die Erfindung betrifft eine Vorrichtung zum Siegeln einer ersten Packstoffbahn, insbesondere einer Deckfolie, auf eine zweite Packstoffbahn, insbesondere einer warengefüllte Näpfe aufweisenden Formfolie, mit einer Vorschubwalze und einer beheizbaren Siegelwalze, zwischen denen die erste Packstoffbahn und die zweite Packstoffbahn zum Siegeln hindurchführbar sind, und mit einer Vorheizung zum Erwärmen der ersten Packstoffbahn stromauf vor der Siegelwalze.

Bei der Verbindung zweier Packstoffbahnen mittels Siegeln, wie dies insbesondere zur Herstellung von Blisterpackungen erforderlich ist, muß dem Siegelvogang eine Vorheizung vorgeschaltet werden, um mit der kontinuierlichen Walzensiegelung unter Verwendung einer Vorschubwalze und einer beheizbaren Siegelwalze alle Deckfolienarten bei höheren Bahngeschwindigkeiten verarbeiten zu können. Der Einsatz der Vorheizung bewirkt, daß die Erwärmungszeit der Deckfolie bis zum Erreichen der Siegeltemperatur verlängert wird, so daß auch schlecht leitende Deckfolienarten wie zum Beispiel Papierdeckfolie mit der erforderlichen Temperatur an die Siegelstelle zwischen der Vorschubwalze und der Siegelwalze gelangen. In der DE 195 17 616 A1 ist eine Vorrichtung der eingangs genannten Art beschrieben, die die Anordnung einer als Heizkeil ausgebildeten Vorheizung in unmittelbarer Nähe der beheizbaren Siegelwalze beschreibt. Dieser Heizkeil erschwert den Zugang zu dem Siegelspalt zwischen der Vorschubwalze und der Siegelwalze und stellt im Übrigen ein thermisch träges System dar, bei dem insbesondere bei Produktionsstörungen der Wärmeeintrag in die beiden Packstoffbahnen nicht optimal geregelt werden kann.

Aus der DE 198 50 143 A1 ist es zum Verbinden zweier Körper, nämlich eines Klebebandes auf einem elastischen Profilklörper bekannt, den Profilkörper mittels eines im nahen Infrarot wirksamen Strahlers (NIR-Strahler) zu erwärmen und sodann zwischen zwei Kontaktrollen das Klebeband auf den Profilkörper zu pressen. Der NIR-Strahler umfasst zwei Röhrenstrahler, die jeweils einen Wolframfaden aufweisen, der von elektrischem Strom durchflossen wird, um die NIR-Strahlung zu erzeugen, wobei eine Stromregelung ausgenutzt wird, um die Temperatur des Wolframfadens und damit die Gesamt-Strahlungsleistung der emittierten Strahlung zu regeln. Zusätzlich ist auch eine Abstandssteuerung vorgesehen, die eine Einstellung des Abstandes des Infrarot-Strahlungsquelle von der zu bestrahlenden Oberfläche erlaubt.

Der Erfindung liegt die Aufgabe zugrunde, eine Vorrichtung der eingangs genannten Art so auszubilden, daß Probleme, unabhängig von deren Quelle, bei der Erwärmung der ersten Packstoffbahn sicher erkannt und schnell behoben werden können, ohne lang andauernde Produktionsstörungen zu verursachen.

Diese Aufgabe wird nach der Erfindung bei einer Vorrichtung der eingangs genannten Art dadurch gelöst, daß die Vorheizung eine elektromagnetische Strahlung aussendende Strahlungsquelle aufweist, die in einer Strahlungskammer eines Heizungsgehäuses angeordnet ist, an der die erste Packstoffbahn vorbeiführbar ist, daß ein Sensor zur Überwachung der Atmosphäre der Strahlungskammer zugeordnet ist, und daß in Abhängigkeit des Sensorsignals die Strahlungskammer verschließbar ist.

Die Erfindung nutzt aus, daß durch die an der Strahlungkammer vorbeigeführte erste Packstoffbahn bei deren Erwärmung eine Rückwirkung auf die Strahlungskammer erfolgt, die zur Kontrolle der Prozeßparameter ausgenutzt werden kann. Die Erwärmung der ersten Packstoffbahn führt zu dem Ausgasen flüchtiger Bestandteile und erhöht deren Dampfdruck beziehungsweise Partialdruck in der Strahlungskammer, der von dem Sensor erfasst werden kann. Auf diese Weise kann eine unzureichende Erwärmung ebenso sicher erkannt werden wie eine zu hohe Erwärmung der ersten Packstoffbahn, unabhängig von deren Ursache, die beispielsweise in einer falschen Vorschubgeschwindigkeit der ersten Packstoffbahn, oder in einer falschen Leistungssteuerung der Vorheizung liegen kann. Da die Strahlungsquelle bei geeignet gewählten Bereichen des elektromagnetischen Spektrums eine Oberflächentemperatur von ca. 800° C erreicht, kann es bei Fehlfunktionen in Abhängigkeit des Materials der ersten Packstoffbahn zu deren weitreichender Beschädigung kommen, der durch die Verschließbarkeit der Strahlungskammer vorgebeugt wird.

Bevorzugt ist es, wenn die erste Packstoffbahn auf der Siegelseite an der Strahlungskammer vorbeiführbar ist, da so die Erwärmung der Packstoffbahn auf der zur Auflage auf die zweite Packstoffbahn kommenden Seite erfolgt und die Erwärmung nicht durch die gesamte Dicke der ersten Packstoffbahn durchdringen muß.

Besonders bevorzugt ist es, wenn die Strahlungskammer durch eine zwischen der ersten Packstoffbahn und dem Heizungsgehäuse angeordnete Verschlußplatte verschließbar ist. Diese Verschlußplatte verschließt unmittelbar die Strahlungskammer und schützt so die Umgebung des Heizungsgehäuses vor fortwährender Wärmeeinwirkung, so daß eine Gefährdung des Bedienpersonals beseitigt ist, die erste Packstoffbahn beispielsweise bei einer Störung des Vorschubs keine Beschädigung erleidet und von den hohen Temperaturen in der Strahlungskammer auch keine Brandgefahr mehr ausgeht. Es hat sich dabei als zweckmäßig erwiesen, wenn die Verschlußplatte in Förderrichtung der ersten Packstoffbahn vor die Strahlungskammer translatorisch verstellbar ist. Dies hat sich insbesondere auch für den geordneten Start und Stop der Vorrichtung bewährt, da so synchron mit dem Vorschub der ersten Packstoffbahn auch die Verschlußplatte vor die Strahlungskammer gefahren werden kann, so daß erwärmte Bereiche der ersten Packstoffbahn ordnungsgemäß gesiegelt werden können, während nachfolgende Bereiche nicht mehr der Erwärmung unterliegen.

Im Rahmen der Erfindung weiterhin besonders bevorzugt ist es, wenn die Strahlungskammer durch einen auf der der Strahlungskammer abgewandten Seite der ersten Packstoffbahn angeordneten Reflektor verschließbar ist. Dieser Reflektor erfüllt ebenso wie die Verschlußplatte die Aufgabe, die Strahlungskammer zu verschließen, so daß diese beiden Bauteile bei gemeinsamer Realisierung als redundante Sicherheitsmerkmale aufzufassen sind. Um das Verschließen der Strahlungskammer durch den Reflektor auf kürzest möglichem Wege zu erreichen, ist der Reflektor senkrecht zur Ebene der ersten Packstoffbahn vor die Strahlungskammer verstellbar. Außerdem ist dem Reflektor eine Kühleinrichtung zugeordnet, um effektiv die Wärmeentwicklung innerhalb des Heizungsgehäuses zu kompensieren beziehungsweise nach dem Abschalten der Strahlungsquelle eine schnelle Temperatursenkung zu erreichen. Dabei bietet es sich dann besonders an, daß die erste Packstoffbahn zu dem Reflektor geneigt durch das Heizungsgehäuse geführt ist, da so bei einem Riß der ersten Packstoffbahn diese unter der Wirkung der Schwerkraft auf den gekühlten Reflektor fällt und gegen Beschädigung geschützt ist. Dabei bietet es sich dann an, daß das Heizungsgehäuse parallel zum Bahnlauf der ersten Packstoffbahn geneigt angeordnet ist, um eine parallele Ausrichtung des Heizungsgehäuses, des Reflektors und der ersten Packstoffbahn zu erreichen und so in einfacher Weise konstante Abstände der ersten Packstoffbahn von der Strahlungskammer gewährleisten zu können. Zweckmäßig weist der Neigungswinkel einen Betrag zwischen 15° und 45°, vorzugsweise 20° bis 30° auf.

Dem Heizungsgehäuse ist stromauf vor der Strahlungskammer eine lösbare Klemme zur Fixierung der ersten Packstoffbahn zugeordnet.

Um den Sensor nicht den hohen Temperaturen in der Strahlungskammer aussetzen zu müssen, ist der Sensor über mindestens eine Entlüftungsöffnung mit der Strahlungskammer verbunden. Zur effektiven Weiterleitung der in der Strahlungskammer vorliegenden Siegeldämpfe ist wahlweise die Entlüftungsöffnung an eine Unterdruckquelle zum Absaugen der Siegeldämpfe angeschlossen.

Als weiteres Sicherheitsmerkmal ist der Strahlungskammer stromab ein Pyrometer nachgeordnet, wobei vorzugsweise das Pyrometer mit dem Sensor in einem Regelkreis zur Regelung der Strahlungsquelle eingebunden ist. Eine weitere Steigerung des Sicherheitsniveaus wird erreicht, wenn die Verschlußplatte und/oder der Reflektor in den Regelkreis eingebunden sind.

Als zweckmäßig hat es sich erwiesen, wenn die Verschlußplatte und/oder der Reflektor und/oder die Klemme mittels eines druckmittelbetätigbaren Zylinderstiftes verstellbar ist.

Vorteilhaft ist es auch, wenn das Heizungsgehäuse mit einer Kühleinrichtung thermisch verbunden ist, um so eine unerwünschte und unkontrollierte Verteilung der in der Strahlungskammer erzeugten Wärme zu kontrollieren beziehungsweise zu vermeiden. Günstig ist es auch, wenn die Vorschubwalze mit einer Kühleinrichtung thermisch verbunden ist, da so die zweite Packstoffbahn, in deren Näpfe die Waren bereits verpackt sind, vor Wärmeeinwirkung geschützt ist und auch wärmeempfindliche Produkte verpackt werden können.

Im Rahmen der Erfindung weiterhin vorgesehen ist es, wenn die Strahlungsquelle durch einen NIR-Strahler gebildet ist.

Im folgenden wird die Erfindung an einem in der Zeichnung dargestellten Ausführungsbeispiel näher erläutert; es zeigen:
- Fig. 1: eine schematische Darstellung der Vorrichtung in einer Seitenansicht mit der durch die Verschlußplatte verschlossenen Strahlungskammer des Heizungsgehäuses,
- Fig. 2: eine der Fig. 1 entsprechende Darstellung mit der geöffneten Strahlungskammer, und
- Fig. 3: eine der Fig. 1 entsprechende Darstellung mit der durch den Reflektor verschlossenen Strahlungskammer.

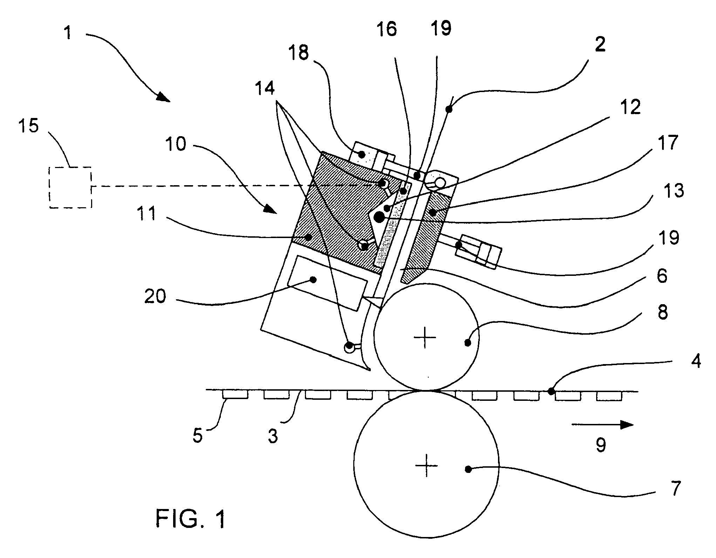

In der Zeichnung ist eine Vorrichtung 1 zum Siegeln einer ersten Packstoffbahn 2 auf eine zweite Packstoffbahn 3 gezeigt, wobei in dem gezeigten Ausführungsbeispiel die zweite Packstoffbahn 3 durch eine Formfolie 4 gebildet ist, die mit Waren gefüllte Näpfe 5 aufweist, die durch die erfindungsgemäße Vorrichtung mit einer Deckfolie 6 als erste Packstoffbahn 2 versiegelt werden sollen. Die Vorrichtung 1 umfasst eine Vorschubwalze 7, die mit einer Kühleinrichtung thermisch verbunden ist und somit gekühlt werden kann. Der Vorschubwalze 7 zugeordnet ist eine beheizbare Siegelwalze 8, zwischen denen hindurch die Deckfolie 6 und die Formfolie 4 zum Siegeln geführt sind. Der Vorschub der Formfolie 4 sowie der Deckfolie 6 erfolgt in Richtung des Pfeiles 9 in Fig. 1.

Stromauf vor der beheizbaren Siegelwalze 8 ist für die Erwärmung der Deckfolie eine Vorheizung 10 angeordnet, die eine in einem Heizungsgehäuse 11 ausgebildete Strahlungskammer 12 umfasst, in der ein NIR-Strahler 13 als eine elektromagnetische Strahlung aussendende Strahlungsquelle angeordnet ist. An der Strahlungskammer 12 mit der Strahlungsquelle vorbeigeführt ist die Deckfolie 6, mit ihrer Siegelseite, die zur Auflage auf die Formfolie 4 gelangt.

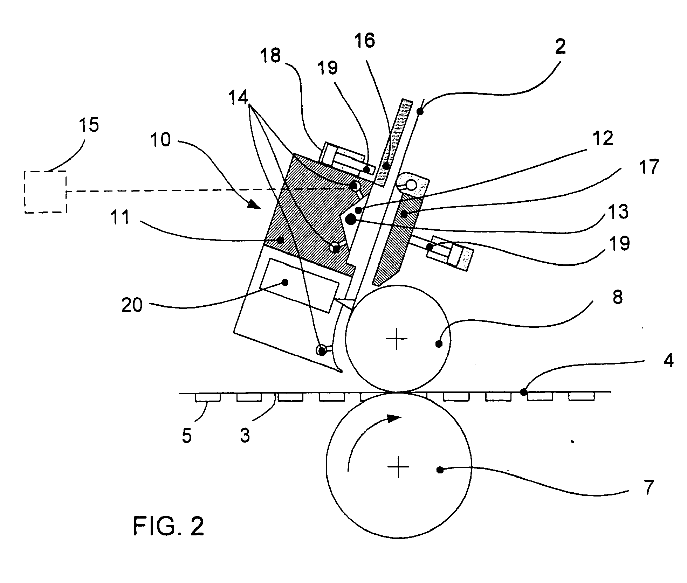

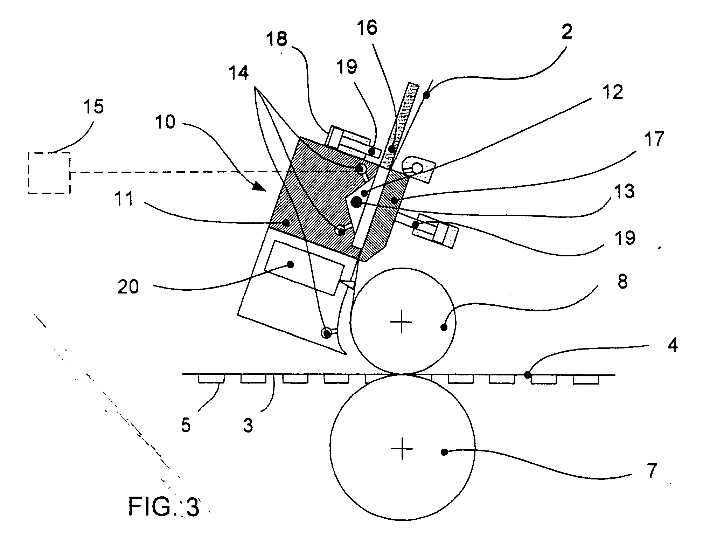

Die Strahlungskammer 12 ist über mindestens eine, in dem gezeigten Ausführungsbeispiel 2 Entlüftungsöffnungen 14 mit einem Sensor 15 verbunden, der der Überwachung der Atmosphäre in der Strahlungskammer 12 dient. In Abhängigkeit des Sensorsignals ist die Strahlungskammer 12 verschließbar, wobei dafür zum einen eine zwischen dem Heizungsgehäuse 11 und der ersten Packstoffbahn 2 angordnete Verschlußplatte 16 vorgesehen ist, die in der Fig. 1 in der geschlossenen Stellung, in der Fig. 2 in der geöffneten Stellung gezeigt ist. Zum anderen dient dem Verschließen der Strahlungskammer 12 ein Reflektor 17, der auf der der Strahlungskammer 12 abgewandten Seite der ersten Packstoffbahn 2 angeordnet ist; dieser Reflektor 17 ist in der Fig. 2 in der geöffneten, in der Fig. 3 in der geschlossenen Stellung gezeigt. Die Verschlußplatte 16 wird in Förderrichtung der ersten Packstoffbahn 2 translatorisch vor die Strahlungskammer 12 verstellt, während der Reflektor 17 senkrecht zur Ebene der ersten Packstoffbahn 2 verstellt wird. Stromauf vor der Strahlungskammer 12 ist dem Heizungsgehäuse 11 eine lösbare Klemme 18 zur Fixierung der ersten Packstoffbahn 2 zugeordnet, wobei die Klemme 18, der Reflektor 17 sowie die Verschlußplatte 16 jeweils mittels eines druckmittelbetätigbaren Zylinderstiftes 19 verstellbar sind, wobei der Übersichtlichkeit halber der der Verschlußplatte 16 zugeordnete Zylinderstift 19 in der Zeichnung nicht dargestellt ist.

Dem Reflektor 17 ist eine Kühleinrichtung zugeordnet und auch das Heizungsgehäuse 11 ist mit einer Kühleinrichtung thermisch verbunden, so daß die Umgebung der Vorheizung 10 effektiv gegen die in der Strahlungskammer 12 entwickelte Wärme abgeschirmt werden kann. Aus der Zeichnung ist weiterhin ersichtlich, daß das Heizungsgehäuse 11 mit einem Neigungswinkel von ca. 30° gegen die Senkrechte geneigt ist und auch die erste Packstoffbahn 2 mit diesem Neigungswinkel durch das Heizungsgehäuse 11 geführt ist, so daß bei einem Bruch der ersten Packstoffbahn 2 diese unter der Wirkung der Schwerkraft auf den gekühlten Reflektor 17 fällt und so gegen weitere Beschädigungen geschützt ist.

Der Strahlungskammer 12 stromab ist ein Pyrometer 20 nachgeordnet, das mit dem Sensor 15 sowie der Verschlußplatte 16 und dem Reflektor 17 in einen Regelkreis eingebunden sind.

Mit einer derartigen Gestaltung der Vorheizung 10 stehen vielfältige Sicherheitsfunktionen zur Verfügung, um eine Beschädigung der Deckfolie 6 durch den NIR-Strahler 13 und der durch diesen erreichbaren Oberflächentemperatur von ca. 800° C zu vermeiden beziehungsweise eine Brandgefahr zu unterbinden. Die Fig. 2 zeigt dabei den normalen, störungsfreien Produktionszustandes, der beispielsweise für einen Wechsel der Deckfolie 6 beendet werden muß. Bei einem Maschinenstop fährt dazu die Verschlußplatte 16 aus der in der Fig. 2 gezeigten Position in die aus Fig. 1 ersichtliche Position und die Klemme 18 wird genutzt, um die Deckfolie 6 einzuklemmen und deren Zurückrutschen zu vermeiden.

Nachfolgend wird geschildert, wie Produktionsstörungen auch bei multiplen Fehlerquellen sicher beherrscht werden können.

Ausgehend von der in Fig. 1 gezeigten Konfiguration kann es vor einem erneuten Start der Produktion mit dem Siegeln der Formfolie 4 durch die Deckfolie 6 dazu kommen, daß der Antrieb der Vorschubwalze 7 nicht anläuft und die daraus resultierende Störmeldung nicht richtig verarbeitet wird. Die sich daraus ergebende Störung erkennt der Sensor 15 über die Belüftungsbohrungen 14 durch die Veränderungen in der Atmosphäre in der Strahlungskammer 12, so daß durch ein Signal vom Sensor 15 der NIR-Strahler 13 abgeschaltet wird.

Ausgehend von dem in Fig. 2 gezeigten Normalbetrieb kann es zu einer Störung hinsichtlich des Vorschubes der Deckfolie 6 kommen mit dem Ergebnis, daß diese mit zu geringer Geschwindigkeit an der Strahlungskammer 12 vorbeigeführt wird. Daraus resultiert ein unzulässiger Temperaturanstieg auf der Siegelseite der Deckfolie 6, der mit dem Pyrometer 20 erkannt wird, der den NIR-Strahler 13 abschaltet. Tritt zu der vorstehend geschilderten Störung nun noch ein defektes Pyrometer 20 hinzu, wird die Produktionsstörung vom Sensor 15 über die Entlüftungsöffnungen 14 in der Strahlungskammer 12 erfasst und die Strahlungskammer 12 durch die Verschlußplatte 16 geschlossen, um ohne Gefährdung durch die Wärmeentwicklung in der Strahlungskammer 12 eine Überprüfung der Vorheizung 10 und Behebung der Fehlerquellen zu ermöglichen.

Liegt im Falle einer Fehlerhäufung neben einer zu geringen Geschwindigkeit der Deckfolie und einer Störung des Pyrometers 20 auch noch ein Defekt bei dem druckmittelbetätigbaren Zylinderstift 19 der Verschlußplatte 16 vor, so steht als weiteres redundantes Sicherheitsmerkmal der Reflektor 17 zur Verfügung, der bei Detektion dieser Störung mittels des Sensors 15 durch die Entlüftungsöffnungen 14 die Strahlungskammer 12 abdichtet, während parallel dazu der NIR-Strahler 13 abgeschaltet wird.

Mit dieser vorstehend geschilderten Vorheizung 10 ergeben sich die Vorteile, daß alle Deckfolienarten bei der kontinuierlichen Walzensiegelung mit der maximalen Maschinengeschwindigkeit verarbeitet werden können, insbesondere auch Papier-Deckfolien, bei der die Wärme unmittelbar auf die Siegelseite aufgebracht wird und nicht durch das Papier hindurch. Die Vorheizung 10 arbeitet berührungslos und schont damit die Deckfolie 6. Es wird eine sehr gleichmäßige Temperaturverteilung in der Siegellackschicht der Deckfolie 6 erreicht und eine Reduzierung der Siegelwalzentemperatur auch bei hohen Foliengeschwindigkeiten auf unter 200° C ermöglicht, so daß auch Deckfolien 6 mit temperaturempfindlichen Druckfarben verarbeitet werden können. Da ein geschlossenes Heizungsgehäuse 11 vorliegt, das gekühlt werden kann, und die Siegelwalzentemperatur reduziert ist, ist für den Bediener eine höhere Sicherheit beim Einfädeln der Deckfolie 6 und der Formfolie 4 gegeben.

## Patentansprüche

1. Vorrichtung zum Siegeln einer ersten Packstoffbahn (2), insbesondere einer Deckfolie (6), auf eine zweite Packstoffbahn (3), insbesondere einer warengefüllte Näpfe (5) aufweisenden Formfolie (4), mit einer Vorschubwalze (7) und einer beheizbaren Siegelwalze (8), zwischen denen die erste Packstoffbahn (2) und die zweite Packstoffbahn (3) zum Siegeln hindurchführbar sind, und mit einer Vorheizung (10) zum Erwärmen der ersten Packstoffbahn (2) stromauf vor der Siegelwalze (8), **dadurch gekennzeichnet, daß** die Vorheizung (10) eine elektromagnetische Strahlung aussendende Strahlungsquelle aufweist, die in einer Strahlungskammer (12) eines Heizungsgehäuses (11) angeordnet ist, an der die erste Packstoffbahn (2) vorbeiführbar ist, daß ein Sensor (15) zur Überwachung der Atmosphäre der Strahlungskammer (12) zugeordnet ist, und daß in Abhängigkeit des Sensorsignals die Strahlungskammer (12) verschließbar ist.

2. Vorrichtung nach Anspruch 1, **dadurch gekennzeichnet, daß** die erste Packstoffbahn (2) auf der Siegelseite an der Strahlungskammer (12) vorbeiführbar ist.

3. Vorrichtung nach Anspruch 1 oder 2, **dadurch gekennzeichnet, daß** die Strahlungskammer (12) durch eine zwischen der ersten Packstoffbahn (2) und dem Heizungsgehäuse (11) angeordnete Verschlußplatte (16) verschließbar ist.

4. Vorrichtung nach Anspruch 3, **dadurch gekennzeichnet, daß** die Verschlußplatte (16) in Förderrichtung der ersten Packstoffbahn (2) vor die Strahlungskammer (12) translatorisch verstellbar ist.

5. Vorrichtung nach einem der Ansprüche 1 bis 5, **dadurch gekennzeichnet, daß** die Strahlungskammer (12) durch einen auf der der Strahlungskammer (12) abgewandten Seite der ersten Packstoffbahn (2) angeordneten Reflektor (17) verschließbar ist.

6. Vorrichtung nach Anspruch 6, **dadurch gekennzeichnet, daß** der Reflektor (17) senkrecht zur Ebene der ersten Packstoffbahn (2) vor die Strahlungskammer (12) verstellbar ist.

7. Vorrichtung nach Anspruch 6, **dadurch gekennzeichnet, daß** dem Reflektor (17) eine Kühleinrichtung zugeordnet ist.

8. Vorrichtung nach einem der Ansprüche 1 bis 7, **dadurch gekennzeichnet, daß** die erste Packstoffbahn (2) zu dem Reflektor (17) geneigt durch das Heizungsgehäuse (11) geführt ist.

9. Vorrichtung nach Anspruch 8, **dadurch gekennzeichnet, daß** das Heizungsgehäuse (11) parallel zum Bahnlauf der ersten Packstoffbahn (2) geneigt angeordnet ist.

10. Vorrichtung nach Anspruch 8 oder 9, **dadurch gekennzeichnet, daß** der Neigungswinkel einen Betrag zwischen 15° und 45° aufweist.

11. Vorrichtung nach einem der Ansprüche 1 bis 10, **dadurch gekennzeichnet, daß** dem Heizungsgehäuse (11) stromauf vor der Strahlungskammer (12) eine lösbare Klemme (17) zur Fixierung der ersten Packstoffbahn (2) zugeordnet ist.

12. Vorrichtung nach einem der Ansprüche 1 bis 11, **dadurch gekennzeichnet, daß** der Sensor (15) über mindestens eine Entlüfungsöffnung (14) mit der Strahlungskammer (12) verbunden ist.

13. Vorrichtung nach Anspruch 12, **dadurch gekennzeichnet, daß** die Entlüftungsöffnung (14) an eine Unterdruckquelle zum Absaugen der Siegeldämpfe angeschlossen ist.

14. Vorrichtung nach einem der Ansprüche 1 bis 13, **dadurch gekennzeichnet, daß** der Strahlungskammer (12) stromab ein Pyrometer (20) nachgeordnet ist.

15. Vorrichtung nach Anspruch 14, **dadurch gekennzeichnet, daß** das Pyrometer (20) mit dem Sensor (15) in einem Regelkreis zur Regelung der Strahlungsquelle eingebunden ist.

16. Vorrichtung nach Anspruch 14, **dadurch gekennzeichnet, daß** die Verschlußplatte (16) und/oder der Reflektor (17) in den Regelkreis eingebunden sind.

17. Vorrichtung nach einem der Ansprüche 11 bis 16, **dadurch gekennzeichnet, daß** die Verschlußplatte (16) und/oder der Reflektor (17) und/oder die Klemme (18) mittels eines druckmittelbetätigbaren Zylinderstiftes (19) verstellbar ist.

18. Vorrichtung nach einem der Ansprüche 1 bis 17, **dadurch gekennzeichnet, daß** das Heizungsgehäuse (11) mit einer Kühleinrichtung thermisch verbunden ist.

19. Vorrichtung nach einem der Ansprüche 1 bis 18, **dadurch gekennzeichnet, daß** die Vorschubwalze (7) mit einer Kühleinrichtung thermisch verbunden ist.

20. Vorrichtung nach einem der Ansprüche 1 bis 19, **dadurch gekennzeichnet, daß** die Strahlungsquelle durch einen NIR-Strahler (13) gebildet ist.
